(19) **Europäisches Patentamt**
**European Patent Office**
**Office européen des brevets**

(11) **EP 3 444 103 A1**

(12) **EUROPEAN PATENT APPLICATION**
published in accordance with Art. 153(4) EPC

(43) Date of publication:
**20.02.2019 Bulletin 2019/08**

(21) Application number: **16898627.1**

(22) Date of filing: **14.04.2016**

(51) Int Cl.:
***B29C 65/02*** *(2006.01)*

(86) International application number:
**PCT/JP2016/061977**

(87) International publication number:
**WO 2017/179167 (19.10.2017 Gazette 2017/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Teijin Limited**
**Osaka-shi, Osaka 530-0005 (JP)**

(72) Inventors:
• **KATO, Takumi**
**Osaka-shi**
**Osaka 530-0005 (JP)**
• **NAGAKURA, Yasunori**
**Osaka-shi**
**Osaka 530-0005 (JP)**

(74) Representative: **Cockerton, Bruce Roger**
**Carpmaels & Ransford LLP**
**One Southampton Row**
**London WC1B 5HA (GB)**

(54) **METHOD FOR MANUFACTURING BONDED BODY**

(57)    The present invention addresses the problem of providing a method for manufacturing a bonded body that reduces springback and can maintain high bonding strength. The above problem can be solved by a method for manufacturing a bonded body in which a contact expected surface a of a molded body A containing carbon fibers and thermoplastic resin is heated and the contact expected surface a and a contact expected surface b of a molded body B containing thermoplastic resin are brought into contact with each other, wherein a contact surface c formed by bringing the contact expected surface a and the contact expected surface b into contact with each other includes a three-dimensional curved surface, and the contact expected surface a is heated and bonded by an infrared irradiation mechanism capable of selectively irradiating infrared rays onto the contact expected surface a.

**EP 3 444 103 A1**

## Description

Technical Field

The present invention relates to a method for producing a joined body by bringing a contact expected surface (a) of a molded body (A) containing carbon fibers and a thermoplastic resin into contact with a contact expected surface (b) of a molded body (B) containing a thermoplastic resin. Specifically, the present invention relates to a method for producing a joined body of a molded body containing carbon fibers and a thermoplastic resin, and of a molded body containing a thermoplastic resin, the joined body reducing springback and having sufficient strength.

Background Art

It is expected to apply composite materials using carbon fibers to fields requiring weight-reduction by using the high specific strength and specific rigidity thereof. Particularly in a case where the matrix resin is a thermoplastic resin, the composite materials are promising from the viewpoint of productivity. However, secondary processing methods of the composite materials, such as joining, trimming and decorating, are still developing.

Various methods have been studied for the joining method particularly. First, methods using a rivet or an adhesive can be mentioned. However, a punching step is necessary for the rivet, and a coating step and a curing step are necessary for the adhesive. These require more steps and these cause an increase in the weight due to joining members such as the rivet or adhesive, and therefore, these are not preferable. On the other hand, by using the molded body containing a thermoplastic resin, welding methods such as ultrasonic welding, vibration welding, hot plate welding, or infrared heat welding can be applied as a method for joining molded bodies. Welding is a useful joining method from the viewpoint of high joining strength and recycle of materials. Heat welding using an infrared ray is particularly suitable for welding a large molded article having a complex shape.

Examples of technical documents of disclosing a technique relating to welding using infrared heating include Patent Literature 1 and Patent Literature 2. Patent Literature 1 describes a joining method by vibration welding a carbon fiber composite material whose contact expected surface is pre-heated by an infrared heater. Patent Literature 2 describes a welding device using infrared heating.

Citation List

Patent Literature

    Patent Literature 1: JP-A-2013-014113
    Patent Literature 2: JP3175513U

Summary of Invention

Problems to be Solved by the Invention

However, in a case of using the joining method described in Patent Literature 1 in a molded body containing carbon fibers and a thermoplastic resin, since the molded body has a high thermal conductivity, thermoplastic resins other than the contact expected surface are also heat-melted. As a result, heating traces are left around the contact surface of the obtained joined body, and thus the appearance of the joined body becomes poor. Particularly in a case where the contact surface formed using the contact expected surface has a three-dimensional curved surface, temperature unevenness is easy to occur and it is hard to heat the contact surface uniformly, as compared with a case where the contact surface is only a simple plane surface. Therefore, the appearance of the joined body becomes poor particularly.

As a further problem in the present invention, in a case where the carbon fiber contained in the molded body (A) has a weight average fiber length ranging from 1 mm to 100 mm, there are problems that springback is easy to occur when heating the molded body (A), and the joined body obtained in this case has low physical properties.

The present invention has been made in view of the above, and an object of the present invention is to provide a method for producing a joined body that reduces springback and can maintain high joining strength.

Means for Solving the Problem

As a result of an extensive investigation, the inventors of the present invention have found that the above problems can be solved by means described below. Thus, the inventors have arrived at the present invention.

Namely, the present invention is as follows.

[1] A method for producing a joined body, including:

heating a contact expected surface (a) of a molded body (A) containing carbon fibers having a weight average fiber length of 1 mm to 100 mm and a thermoplastic resin, by using an infrared radiation mechanism capable of selectively infrared radiating the contact expected surface (a);

brining the heated contact expected surface (a) into contact with a contact expected surface (b) of a molded body (B) containing a thermoplastic resin; and

joining the molded body (A) and the molded body (B),

wherein contact surfaces (c) formed by contacting the contact expected surface (a) with the contact expected surface (b) include three-dimensional curved surfaces.

[2] The method for producing a joined body according to the above [1], wherein the contact expected surface (b) of the molded body (B) containing a thermoplastic resin is pre-heated and the contact expected surface (b) in a pre-heated state is brought into contact with the contact expected surface (a).

[3] The method for producing a joined body according to the above [1] or [2], wherein the carbon fiber contained in the molded body (A) is dispersed randomly in an in-plane direction of the molded body (A).

[4] The method for producing a joined body according to any one of the above [1] to [3], wherein the infrared radiation mechanism is a mechanism including a shield, for preventing radiation of the infrared ray, on a surface of the molded body (A) other than the contact expected surface (a).

[5] The method for producing a joined body according to the above [4], wherein the shield is an infrared absorber absorbing the infrared ray, or an infrared reflector reflecting the infrared ray.

[6] The method for producing a joined body according to any one of the above [1] to [3], wherein the infrared radiation mechanism is a mechanism in which an infrared receiving part is provided on the molded body (A) and the contact expected surface (a) is disposed on the infrared receiving part.

[7] The method for producing a joined body according to the above [6], wherein the infrared receiving part is a molded body in a shape of fiber, powder, sheet, block or a combination thereof.

[8] The method for producing a joined body according to the above [6] or [7], wherein the infrared receiving part is a molded body (D) containing carbon fibers and a thermoplastic resin.

[9] The method for producing a joined body according to the above [8], wherein the molded body (D) is integrated with the molded body (A) by integrally molding with the molded body (A).

[10] The method for producing a joined body according to the above [8] or [9], wherein a volume fraction (Vfa) of the carbon fiber contained in the molded body (A) and a volume fraction (Vfd) of the carbon fiber in the molded body (D) satisfy a relationship described below:

$$0.5 \leqq Vfd/Vfa \leqq 1.0.$$

Herein, the volume fraction of the carbon fiber is represented by the following equation:

$$(Volume\ fraction\ (Vfa,\ Vfd)\ of\ carbon\ fiber\ in\ molded\ body\ (A,\ D))$$

$$= 100 \times (volume\ of\ carbon\ fiber)\ /\ ((volume\ of\ carbon\ fiber) + (volume\ of\ thermoplastic\ resin)).$$

[11] The method for producing a joined body according to the above [10], wherein the volume fraction (Vfa) of the carbon fiber is 5% to 70%.

[12]The method for producing a joined body according to any one of the above [4] to [11], wherein the shield is used as the infrared radiation mechanism.

Advantageous Effect of Invention

According to the present invention, by using a specific infrared radiation mechanism, only the contact expected surface (a) can be selectively heated, even in a case where the contact surfaces (c) formed by contacting the contact expected surface (a) with the contact expected surface (b) include three-dimensional curved surfaces. Therefore, even using a molded body (A) having higher infrared absorptance and higher thermal conductivity than a conventional thermoplastic resin, a joined body having reduced springback and having good physical properties can be obtained. In addition, since a specific infrared radiation mechanism is used, the method for producing a joined body of the present invention is excellent in productivity of the joined body. Further, the joined body thus obtained can be used, for example, for applications requiring excellent welding strength such as structural parts of automobiles or the like, and ensures weight-reduction of the vehicle body or the like.

Brief Description of Drawings

Fig. 1 is a pattern diagram showing an example of a molded body including a three-dimensional curved surface.
Fig. 2 is a pattern diagram showing an example of performing joining using a shield.
Fig. 3 is a pattern diagram showing an example of performing joining using an infrared receiving part.
Fig. 4 is a pattern diagram showing an example of a disposition of an infrared heater.
Fig. 5 is a pattern diagram showing another example of the disposition of the infrared heater.
Fig. 6 is a pattern diagram showing an example of forming the joined body with providing a molded body (D).
Fig. 7 is a pattern diagram showing an example of forming the joined body without providing the molded body (D).
Fig. 8 is a pattern diagram showing an example of evaluating springback and appearance when the joined body is formed with providing the molded body (D).
Fig. 9 is a pattern diagram showing an example of evaluating springback and appearance when the joined body is formed without providing the molded body (D).
Fig. 10 is a pattern diagram showing an example of a range of a contact expected surface (a) when the joined body is formed with providing the molded body (D).
Fig. 11 is a pattern diagram showing an example of a range of a contact expected surface (a) when the joined body is formed without providing the molded body (D).

Description of Embodiments

Hereinafter, preferred embodiments of the present invention are described.
The joined body in the present invention is one formed by heating a contact expected surface (a) of a molded body (A) containing carbon fibers and a thermoplastic resin, bringing the contact expected surface (a) into contact with a contact expected surface (b) of a molded body (B) containing a thermoplastic resin, and joining the molded body (A) and the molded body (B).

[Molded Body (A)]

The molded body (A) used in the present invention refers to a molded body containing carbon fibers and a thermoplastic resin. Herein, the molded body (A) and the molded body (B) which is described later are structures having at least one surface shape, and hereinafter a planar molded body having a thickness is described as a representative example. In the present invention, the contact surfaces (c) refer to surfaces formed by contacting the contact expected surface (a) and the contact expected surface (b). Each of the contact surfaces (c), the contact expected surface (a), and the contact expected surface (b) includes a three-dimensional curved surface, for example, a plurality of three-dimensional curved surfaces may be included.

(Carbon Fiber Contained in Molded Body (A))

As the carbon fiber, a polyacrylonitrile (PAN) based carbon fiber, a petroleum/coal-pitch based carbon fiber, a rayon based carbon fiber, a cellulose based carbon fiber, a lignin based carbon fiber, a phenol based carbon fiber, a vapor grown carbon fiber, or the like are known. In the present invention, any of these carbon fibers can be suitably used.
Among these, from the viewpoint of being excellent in tensile strength, the polyacrylonitrile (PAN) based carbon fiber can be preferably used in the present invention. In a case of using the PAN based carbon fiber as a carbon fiber, a tensile modulus thereof is preferably within a range of 100 GPa to 600 GPa, more preferably within a range of 200 GPa to 500 GPa, and still more preferably within a range of 230 GPa to 450 GPa. The tensile strength is preferably within a range of 2000 MPa to 10000 MPa, and more preferably within a range of 3000 MPa to 8000 MPa.

The carbon fiber used in the present invention may have a sizing agent adhered to a surface thereof. In a case of using the carbon fiber with a sizing agent adhered, the type of the sizing agent can be appropriately selected according to the types of the carbon fiber and the matrix resin, and is not particularly limited.

(Fiber Length of Carbon Fiber Contained in Molded Body (A))

The carbon fiber used in the present invention is preferably a discontinuous fiber. Examples of the discontinuous fiber include those having a weight average fiber length ranging from 1 mm to 100 mm. As a weight average fiber length, 2 mm to 80 mm is preferable, and 5 mm to 50 mm is more preferable.

In a discontinuous fiber having a weight average fiber length of 1 mm or more, springback is easy to occur. Herein, the springback refers to a phenomenon described below. Namely, when heating a molded body containing carbon fibers and a thermoplastic resin, the thermoplastic resin softens, and the stress of the carbon fiber is relaxed. As a result, the carbon fiber raises in a plate thickness direction of the molded body due to the relaxation of the stress of the carbon fiber. This phenomenon is referred to as springback. Due to occurrence of this phenomenon, a phenomenon is observed that the apparent plate thickness of the molded body is increased and the carbon fiber protrudes from the surface of the molded body. Further, the mechanical properties of the molded body may be lowered, and the appearance may be poor. The springback is not easy to occur in a discontinuous fiber having a weight average fiber length of less than 1 mm or a continuous fiber.

In a case where the carbon fiber contained in the molded body (A) has a weight average fiber length ranging from 1 mm to 100 mm, the springback is easy to occur when heating the molded body (A) for joining. The joined body obtained in this case has a problem of low physical properties, but if infrared radiation means is used in the present invention, the problem can be suitably solved.

In the present invention, carbon fibers having different fiber lengths may be used in combination. In other words, the carbon fiber used in the present invention may have a single peak or may have a plurality of peaks in the weight average fiber length.

The weight average fiber length of the carbon fiber can be determined, for example, by measuring fiber lengths of a plurality of fibers randomly extracted from the molded body up to 1 mm unit using a caliper or the like. The weight average fiber length is an average fiber length calculated so as to emphasize those having a long fiber length from the viewpoint of contribution to material physical properties, which is preferable in terms of characterizing the present invention. When the fiber length of each carbon fiber is defined as Li, the weight average fiber length (Lw) is determined according to the following equation.

$$Lw = (\Sigma Li\,2) / (\Sigma\,Li)$$

Extraction of the carbon fiber from the molded body can be carried out by applying heating treatment to the composite material at 500°C for about 1 hour, and removing the thermoplastic resin in the furnace.

(Form of Carbon Fiber Contained in Molded Body (A))

The form of the fiber in the present invention is a discontinuous fiber having a weight average fiber length within a specific numerical value range as described above. In a range not impairing the object of the producing method of the present invention, other forms of fibers may be contained within a range that can be molded. In a case where other fiber is a continuous fiber, it may be a woven fabric or a unidirectional material in which carbon fibers are disposed in one direction.

Examples of those whose form of carbon fibers are the discontinuous fibers include those in which discontinuous carbon fibers are arranged so as to be randomly dispersed in the in-plane direction of the molded product A and overlapped. In this case, the carbon fiber may be present as it is in the form of a carbon fiber bundle in the molded body. In addition, the carbon fiber may be in a mixed form of a carbon fiber bundle and single fibers, or may be completely opened and in a single fiber form.

Herein, the in-plane direction refers to a direction perpendicular to the plate thickness direction. When the carbon fiber is disposed in the in-plane direction, thermal conductivity of the molded body (A) in the in-plane direction is increased. As a result, when radiating the contact expected surface (a) with an infrared ray, surrounding surface portions other than the contact expected surface (a) are also easy to be heated by heat conduction.

(Thermal Conductivity of Molded Body (A))

In a case where the molded body (A) in the present invention has a high thermal conductivity in the in-plane direction (for example, in a case of a molded body in which the carbon fibers contained in the molded body (A) are randomly dispersed in the in-plane direction of the molded body (A)), the heat is easy to be transferred to the surrounding surface portions other than the contact expected surface (a) and thus the surrounding surface portions are easy to be heated. Therefore, the infrared radiation mechanism used in the present invention is particularly effective for the molded body having a high thermal conductivity in the in-plane direction. The thermal conductivity of the molded body (A) varies depending on the form of the carbon fiber, and the thermal conductivity of the molded body (A) in the in-plane direction in which the present invention is effective is 0.5 W/m·K to 1000 W/m·K. More preferably, the thermal conductivity is 1 W/m·K to 700 W/m·K.

(Contact expected surface (a) of Molded Body (A))

The molded body (A) includes a contact expected surface (a) to contact with and join to the contact expected surface (b) of the molded body (B). The contact expected surface (a) is a part of the surface of the molded body (A), and in joining, the contact expected surface (a) is heated by the infrared radiation mechanism, which is described later. The whole of the contact expected surface (a) may be heated or a part of the contact expected surface (a) may be heated. The heated contact expected surface (a) is brought into contact with the contact expected surface (b), preferably being pressurized. Thereafter, the contact expected surface (a) and the contact expected surface (b) are cooled to a temperature (usually lower than the glass transition temperature (Tg) of the thermoplastic resin) not causing deformation of the thermoplastic resin, and thus a target joined body can be obtained.
The contact expected surface (a) and the contact expected surface (b) contact with each other to form contact surfaces (c) having three-dimensional curved surfaces. The contact surfaces (c) are described later.

(Volume fraction (Vfa) of Carbon Fiber Contained in Molded Body (A))

As for the carbon fiber contained in the molded body (A) in the present invention, it is preferable that the volume fraction (Vfa) of the carbon fiber defined by the following equation is 5% to 70%, more preferably 10% to 60%, and still more preferably 20% to 50%.

$$\text{Vfa} = 100 \times (\text{volume of carbon fiber}) / ((\text{volume of carbon fiber}) + (\text{volume of thermoplastic resin}))$$

When the Vfa of the molded body (A) is 5% or more, the infrared ray radiated from the infrared radiation mechanism can be efficiently absorbed; when the Vfa is 70% or less, high joining strength can be obtained since there is a sufficient amount of thermoplastic resin for welding on the contact surface.

(Thermoplastic Resin Contained in Molded Body (A))

In the present invention, the resin contained in the molded body (A) is a thermoplastic resin.
Specific examples of the thermoplastic resin can include polyamide, polycarbonate, polyoxymethylene, polyphenylene sulfide, polyphenylene ether, polyether ketone, polyether ether ketone, polysulfone, polyether sulfone, polyether imide, polyamide imide, polyester, and polyolefin. In detail, examples include polyamide, polycarbonate, polyoxymethylene, polyphenylene sulfide, polyphenylene ether, modified polyphenylene ether, polyether ketone, polyether ether ketone, polysulfone, polyether sulfone, polyether imide, polyamide imide, polyethylene terephthalate, polytrimethylene terephthalate, polybutylene terephthalate, polyethylene naphthalate, polytrimethylene naphthalate, polybutylene naphthalate, polyethylene, polypropylene, polystyrene, polymethyl methacrylate, AS resin, and ABS resin. Particularly, from the viewpoint of a balance in cost and physical properties, at least one resin selected from the group consisting of polyamide, polypropylene, polycarbonate, and polyphenylene sulfide is preferable. As polyamide (hereinafter sometimes abbreviated as PA, sometimes referred to as nylon), preferred is at least one selected from the group consisting of: PA6 (polycaproamide, also called polycaprolactam, more precisely poly ε-caprolactam), PA26 (polyethylene adipamide), PA46 (polytetramethylene adipamide), PA66 (polyhexamethylene adipamide), PA69 (polyhexamethylene azepamide), PA610 (polyhexamethylene sebacamide), PA611 (polyhexamethylene undecane amide), PA612 (polyhexamethylene dodecane amide), PA11 (polyundecanamide), PA12 (polydodecanamide), PA1212 (polydodecamethylene dodecanamide), PA6T (polyhexamethylene terephthalamide), PA6I (polyhexamethylene isophthalamide), PA912 (polynonamethylene dodecane amide), PA1012 (polydecamethylene dodecane amide), PA9T (polynonamethylene terephthalamide), PA9I (polynonamethylene isophthalamide), PA10T (polydecamethylene terephthalamide), PA10I (polydecamethylene isophthalamide), PA11T (polyundecamethylene terephthalamide), PA11I (polyundecamethylene isophthalamide), PA12T (polydodecamethylene terephthalamide), PA12I (polydodecamethylene isophthalamide), and polyamide MXD6 (polymetaxylylene adipamide).

(Other Substances Contained in Molded Body (A))

Various fillers and additives other than the carbon fiber may be contained in the molded body (A) within a range not impairing the object of the present invention. Examples of the filler can include inorganic fibers such as a glass fiber, a metal fiber and a ceramic fiber, and organic fibers such as polyester and polyamide, but not limited thereto. Examples of the additive include a flame retardant, a thermal stabilizer, an ultraviolet absorber, an antioxidant, or the like, but not limited thereto. In addition, a thermosetting resin may be contained in part as long as it is in a range not impairing the object of the present invention.

(Shape of Molded Body (A))

The shape of the molded body (A) is not particularly limited, but it is preferably a planar shape such as a sheet shape or a plate shape, and may have a plane surface or a curved surface in every direction. The curved surface of the molded body (A) can have a shape including a three-dimensional curved surface similar to the contact surfaces (c). It is preferable that the curved surface is the same three-dimensional curved surface as the contact surfaces (c). In addition, a method for producing the molded body (A) is also not limited, and examples include injection molding, compression molding, blow molding, or the like.

[Molded Body (B)]

The molded body (B) used in the present invention refers to a molded body containing a thermoplastic resin.

(Contact expected surface (b))

The molded body (B) includes a contact expected surface (b) to contact with and join to the contact expected surface (a) of the molded body (A). It is preferable that the contact expected surface (b) is a part of the surface of the molded body (B), and in joining, the contact expected surface (b) is heated by the infrared radiation mechanism, which is described later. The whole of the contact expected surface (b) may be heated or a part of the contact expected surface (b) may be heated. If necessary, the heated contact expected surface (b) is brought into contact with the heated contact expected surface (a), preferably being pressurized. Thereafter, the contact expected surface (a) and the contact expected surface (b) are cooled to a temperature (usually lower than the glass transition temperature (Tg) of the thermoplastic resin) not causing deformation of the thermoplastic resin, and thus a target joined body can be obtained.

(Thermoplastic Resin Contained in Molded Body (B))

When considering welding the molded body (B) and the molded body (A) via the contact expected surface (a), a thermoplastic resin compatible with the thermoplastic resin contained in the molded body (A) may be used as the thermoplastic resin contained in the molded body (B). Specifically, a resin similar to the thermoplastic resin described in the above item (Thermoplastic resin contained in molded body (A)) can be used.
A case where the thermoplastic resin contained in the molded body (B) is the same type of the thermoplastic resin of the molded body (A) is preferable, from the viewpoint of obtaining high joining strength and easy recycle of the materials of the molded body.

(Other Substances Contained in Molded Body (B))

Various fillers and additives other than the carbon fiber may be contained in the molded body (B) within a range not impairing the object of the present invention. Examples of the filler can include inorganic fibers such as a glass fiber, a metal fiber and a ceramic fiber, and organic fibers such as polyester and polyamide, but not limited thereto. Examples of the additive include a flame retardant, a thermal stabilizer, an ultraviolet absorber, an antioxidant, or the like, but not limited thereto. In addition, the thermosetting resin may be contained in part as long as it is in a range not impairing the object of the present invention.

(Shape of Molded Body (B))

The shape of the molded body (B) is not particularly limited, but it is preferably a planar shape such as a sheet shape or a plate shape, and may have a plane surface or a curved surface in every direction. The curved surface of the molded body (B) can have a shape including a three-dimensional curved surface similar to the contact surfaces (c). It is preferable that the curved surface of the molded body (B) is the same three-dimensional curved surface as the contact surfaces (c). It is more preferable that the contact expected surface (b) has the same three-dimensional curved surface as the contact expected surface (a). In addition, a method for producing the molded body (B) is also not limited, and examples include injection molding, compression molding, blow molding, or the like.

[Contact Surfaces (c)]

In the method for producing the joined body of the present invention, contact surfaces (c) formed by bringing the contact expected surface (a) into contact with the contact expected surface (b) includes a three-dimensional curved surface. The contact surfaces (c) refer to a contact surfaces formed by bringing the contact expected surface (a) into contact with the contact expected surface (b) before heating. The three-dimensional curved surface refers to a curved surface that cannot be established by deforming a plane surface, that is, a curved surface that cannot be expanded in a plane surface without stretching. Specific examples include a hemispheric surface, a spherical surface, a curved surface combining a spherical surface with a plane surface, a curved surface combining a developable surface with a plane surface (but excluding one in which the combined surface is a developable surface), a curved surface combining a developable surface with a developable surface (but excluding one in which the combined surface is a developable surface), or the like. More specific examples include a part of a curved surface constituting a surface of a sphere or an ellipsoid.

When radiating the infrared ray to a portion of the three-dimensional curved surface without using the infrared radiation mechanism in the present invention, the temperature unevenness is easy to be large in heating. Because the contact surfaces (c) have the three-dimensional curved surfaces and the heating efficiency varies depending on the curvature of the contact expected surface (a). Therefore, a portion that has been heated excessively is generated in the molded body (A) locally. As a result, the surrounding of the contact expected surface (a) of the molded body (A) is easy to have a poor appearance. Further, in a case of the molded body (A) in which the heated portion contains a discontinuous carbon fiber having a weight average fiber length of carbon fibers ranging from 1 mm to 100 mm, the above-described springback is easy to occur.

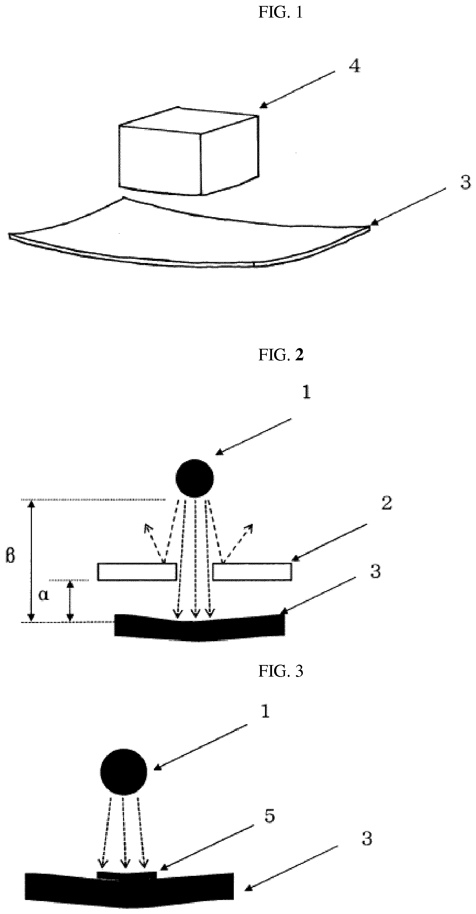

Specific examples of the molded body (A) and the molded body (B) for producing a joined body include a case as in Fig. 1. Fig. 1 shows a case of joining a planar molded body (A) having a large curvature and a box-shaped molded body (B) having a three-dimensional curved surface on the whole bottom surface. In Fig. 1, the contact expected surface (a) and the contact expected surface (b) are brought into contact with each other tightly, and pressurized to form a contact surface having a shape of three-dimensional curved surface, and then the contact expected surface (a) and the contact expected surface (b) are joined via this contact surface. In the case of Fig. 1, one of the contact expected surface (a) and the contact expected surface (b) has a three-dimensional curved surface of a gentle convex shape, and the other has a three-dimensional curved surface of a corresponding gentle concave shape; the entire contact expected surface (a) and the entire contact expected surface (b) are superposed with each other to constitute the contact surfaces (c).

Since in a molded body having such contact surfaces (c), molded bodies may not rub with each other, it is extremely difficult to use vibration welding. Therefore, the welding by infrared heating according to the present invention is extremely effective. In addition, it is preferable that the contact surfaces (c) having a three-dimensional curved surface has a length of 1 mm or more in a pressurization direction in welding. It is preferable that the contact surfaces (c) have a length of 1 mm or more in the pressurization direction and the curvature and degree of the contact surface varies greatly.

The producing method of the present invention is particularly effective in a case where the contact surfaces (c) have areas of 2000 $mm^2$ or more. In a conventional known welding method using ultrasonic waves, even contact surfaces of two molded bodies which have a three-dimensional shape (e.g., a three-dimensional curved surface) can be welded as long as a horn can be produced. However, it is difficult to produce a horn for transmitting the ultrasonic vibration evenly in a wide area. In a case where the contact surface has an area of 2000 $mm^2$ or more, it is extremely difficult to perform stable welding in ultrasonic welding. In such a case where stable welding is difficult to perform in ultrasonic welding, the producing method of the present invention is very effective.

[Infrared Radiation Mechanism]

In the method for producing a joined body including joining the contact expected surface (a) of the molded body (A) and the contact expected surface (b) of the molded body (B) according to the present invention, the contact expected surface (a) is heated using an infrared radiation mechanism that can perform selective radiation. It is preferably a method for producing a joined body in which the contact expected surface (a) of the molded body (A) and the contact expected surface (b) of the molded body (B) are heated together and joined.

The type of the infrared ray generation source radiated by the infrared radiation mechanism is not particularly limited, and examples include a laser, a halogen heater, a carbon heater, a ceramic heater, or the like. Infrared rays from each of the heaters have different infrared wavelength regions. The infrared ray is usually classified into a far-infrared ray, a mid-infrared ray, and a near-infrared ray according to the wavelength thereof. Since the molded body (A) of the present invention contains carbon fibers, any regions of the above wavelengths is high in infrared absorptance, and thus the type of the heater is not limited.

Examples of the infrared radiation mechanism in the present invention can include one including the form described below. By using such an infrared radiation mechanism, the contact expected surface (a) can be selectively heated as desired.

    (1) The infrared radiation mechanism is a mechanism including a shield, for preventing radiation of the infrared ray, on a surface of the molded body (A) other than the contact expected surface (a).
    (2) The infrared radiation mechanism is a mechanism in which an infrared receiving part is provided on the molded body (A) and the contact expected surface (a) is disposed on the infrared receiving part.

Hereinafter, the mechanisms of above (1) and (2) are described.

(Mechanism Including Shield, for Preventing Radiation of Infrared Ray, on Surface of Molded Body (A) other than Contact expected surface (a))

In the present invention, as a preferable example of the infrared radiation mechanism capable of selectively infrared radiating the contact expected surface, the infrared radiation mechanism is a mechanism provided with a shield, for preventing radiation of the infrared ray, on a surface of the molded body (A) other than the contact expected surface (a).

Fig. 2 is a pattern diagram illustrating a mechanism provided with a shield, for preventing radiation of the infrared ray, on the surface of the molded body (A) (3 in Fig. 2) other than the contact expected surface (a), using the shield (2 in Fig. 2).

It is preferable that the material of the shield is a material that can absorb and/or reflect the infrared ray. Namely, it is preferable that the shield is one absorbing the infrared ray (an infrared absorber), or one reflecting the infrared ray (an infrared reflector). Metals are preferable from the viewpoint of workability, heat resistance and durability, and examples include copper, aluminum, iron, titanium, or the like. Among these, aluminum is particularly preferable because the thermal conductivity thereof is high and the specific gravity thereof is small. Since the shield needs to be disposed to insert into a space between the infrared ray generation source and the molded body (A), it is preferable that the thickness of the shield is 0.1 mm to 30 mm. It is more preferable that the thickness of the shield is 0.2 mm to 10 mm. When the thickness of the shield is thinner than 0.1 mm, the shape stability of the shield is worse, and when the thickness of the shield is thicker than 30 mm, the shield is difficult to be in and out between the infrared ray generation source (e.g., 1 in Fig. 2) and the molded body (A) (e.g., 3 in Fig. 2).

In addition, the shape of the shield is not limited, and may be a plate shape as shown by 2 of Fig. 2, or may be a shape having an unevenness or curved surface conforming to a shape shielding except for the contact expected surface (a) of the molded body (A). By combining these shapes, even the molded body (A) has a complicated shape, the contact expected surface (a) can be selectively heated by the infrared ray and the molded body (A) can be joined to the molded body (B).

It is preferable that the installation position of the shield is between the infrared ray generation source and the molded body (A) without direct contacting with the molded body (A). In a case where the shield is not in contact with the molded body (A), heating of the molded body (A) is appropriately carried out and a joinable temperature is easy to be maintained. On the contrary, in a case where the shield is in contact with the molded body (A), the heat absorbed into the shield is transferred to the molded body (A), and thus a portion that has no relation to joining in the molded body (A) may be heated, which is not preferable. Alternatively, on the contrary, the heat is transferred from the heated molded body (A) to the shield, and thus the heating of the molded body (A) may be hindered by the heat dissipated from the shield, which is not preferable.

It is preferable that a distance (e.g., $\alpha$ in Fig. 2) between the contact expected surface (a) and the shield is 0.1 mm to 10 mm. If the distance between the contact expected surface (a) and the shield is 10 mm or less, the infrared ray radiated from the infrared ray generation source does not spread radially. Therefore, it is not likely to heat a wide region beyond the contact expected surface (a). On the other hand, it is preferable that the lower limit of the distance between the contact expected surface (a) and the shield is 0.1 mm. When the distance is less than 0.1 mm, there is a case where the control of the distance may be difficult, and a case where the same phenomenon as the above-described state where the shield is in contact with the molded body (A) may occur.

It is preferable that a distance (e.g., β in Fig. 2) between the contact expected surface (a) and the infrared ray generation source is 1 mm to 30 mm. When the distance between the contact expected surface (a) and the infrared ray generation source is 1 mm or more, a concern that the molded body (A) is brought into contact with the heater due to the springback of the molded body (A) is reduced. If the distance between the contact expected surface (a) and the infrared ray generation source is 30 mm or less, the energy received per area of the contact expected surface (a) receiving the infrared ray is not lowered. As a result, the time for heating the contact expected surface (a) of the molded body (A) is not prolonged. It is more preferable that the distance between the contact expected surface (a) and the infrared ray generation source is 2 mm to 15 mm, and still more preferably 3 mm to 10 mm.

In addition, it is preferable that the distance (e.g., β in Fig. 2) between the contact expected surface (a) and the infrared ray generation source satisfies a relationship of more than twice the distance (e.g., α in Fig. 2) between the contact expected surface (a) and the shield ($\beta > 2\alpha$). Specifically, in a case where the distance between the contact expected surface (a) and the infrared ray generation source is 5 mm, it is necessary to set the distance between the contact expected surface (a) and the shield is set to be less than 2.5 mm. By satisfying this relationship, a joined body having a good appearance and physical properties can be obtained. Since the contact expected surface has a three-dimensional curved surface, a distance to the contact expected surface (a) varies depending on the location, and this distance is an average distance to the contact expected surface (a).

[Infrared Receiving Part]

In the present invention, the infrared radiation mechanism may be a mechanism in which an infrared receiving part is provided on the molded body (A) and the contact expected surface (a) is disposed on the infrared receiving part.

Fig. 3 is a pattern diagram showing a case where the infrared receiving part is provided on the molded body (A) and the contact expected surface (a) is disposed on the infrared receiving part. It is preferable that the material of the infrared receiving part has the same infrared absorptance as that of the molded body (A), or has an infrared absorptance higher than that of the molded body (A). Because it is easy to only heat the infrared receiving part disposed with the join expected surface (a). It is more preferable that a material having an infrared absorptance higher than that of the molded body (A) is used. The form of the infrared receiving part includes fiber, powder, sheet, block or a combination thereof of the molded body.

As a specific example of the infrared receiving part, a molded product can be adopted, which contains a material having an infrared absorptance equal to or higher than that of the molded body (A) and contains a material having a constitution or composition that is similarly easy to absorb infrared rays as the molded body (A) or is easier to absorb infrared rays than the molded body (A). More specific example can include a molded body in which substances that easily absorb infrared rays are mixed, or a molded body in which an increased proportion of a material having a high infrared absorptance among the materials are already mixed in the molded body. Herein, examples of the substance having a high infrared absorptance can include a carbon material, and examples of the material mixed with the thermoplastic resin can include carbon black or carbon fiber. Namely, a molded body in which the carbon black is newly mixed with the molded body (A) or a molded body in which the content of the carbon fiber is higher than that of the molded body (A) has a function as the infrared receiving part. In addition, in the present invention, a method for producing a joined body using a molded body (D) having a function as such an infrared receiving part can be preferably adopted. Hereinafter, the molded body (D) is described.

[Molded Body D]

The infrared receiving part may be a molded body (D) containing carbon fibers having an infrared absorption function, and a thermoplastic resin. In addition, the molded body (D) may also contain an infrared absorbent other than the carbon fiber, in order to further improve the infrared absorption function. Examples of such an infrared absorbent can include carbon materials other than the carbon fiber, more specifically, carbon black.

The molded body (D) may be of the same constitution as the molded body (A) or may be different from the molded body (A). It is more preferable that the constitution of the molded body (D) is different from the molded body (A). In the molded body (D), the form of the carbon fiber, the type of the thermoplastic resin, and the proportion of the carbon fiber contained therein are not particularly limited, as long as the function as the infrared receiving body is not impaired. As described above, in a case where a substance having a high infrared absorptance is contained, the infrared receiving part can be heated effectively in a short time. In a case where the molded body (D) contains the contact expected surface (a), the contact expected surface (a) can also be heated effectively.

In addition, since there may be a case where the molded body (D) constitutes the joining portion of the molded body (A) and the molded body (B), it is necessary to contain the thermoplastic resin contributing to the joining not less than a specific amount. The volume fraction Vfd of the carbon fiber in the molded body (D) is preferably 5% to 70%, more preferably 10% to 60%, and still more preferably 20% to 50%. When the Vfd is 5% or more, the infrared ray radiated from the infrared radiation mechanism can be efficiently absorbed; when the Vfd is 70% or less, high joining strength can be obtained since there is a sufficient amount of thermoplastic resin for welding on the contact surface. Herein, similar to Vfa, Vfd is a value which indicates the carbon fiber contained in the molded body (D) and is represented by the following equation.

$$\text{Vfd} = 100 \times (\text{volume of carbon fiber}) / ((\text{volume of carbon fiber}) + (\text{volume of thermoplastic resin}))$$

In order to perform the more stable welding, it is preferable that a ratio of the volume fraction Vfd of the carbon fiber in the molded body (D) to the volume fraction Vfa of the carbon fiber in the molded body (A) satisfies the following equation.

$$0.5 \leqq \text{Vfd/Vfa} \leqq 1.0$$

When the Vfd/Vfa is 1.0 or less, the molded body (D) is difficult to be cooled and is easy to maintain the heat in heating, and the more thermoplastic resin to be welded, the easier the welding is stable. In addition, when the Vfd/Vfa is 0.5 or more, the infrared absorptance can be kept high and the welding can be carried out effectively.

The volume fraction Vfd of the carbon fiber in the molded body (D) can be calculated using the similar method as the Vfa described above. The method for mounting the molded body (D) to the molded body (A) (the contact expected surface (a)) is not limited, and adhering, welding, or the like is used. In a case of attaching by welding, it is preferable that the thermoplastic resins contained in the molded body (D) and the molded body (A) have compatibility with each other. It is more preferable that the thermoplastic resins contained in the molded body (D) and the molded body (A) are the same type of resin. Further, the molded body (D) may be provided at the same time as molding of the molded body (A) and integrated with the molded body (A).

[Joining Method]

(Heating of Contact expected surface (a))

The joined body of the present invention is obtained by heating the contact expected surface (a) of the molded body (A) containing carbon fibers and a thermoplastic resin, and bringing the heated contact expected surface (a) into contact with a contact expected surface (b) of a molded body (B) containing a thermoplastic resin, so as to join the molded body (A) and the molded body (B). It is preferable that the heating time is the time until the heating temperature of the contact expected surface (a) reaches a sufficient temperature range. Although the heating time varies depending on the infrared heat source used, specifically, it is preferably 1 second to 3 minutes. More preferably, heating time is 5 seconds to 1 minute.

Specifically, a method is preferable in which the molded body (A) is prepared, the contact expected surface (a) of the molded body (A) is brought close to the infrared ray generation source, and the contact expected surface (a) is heated by radiating the infrared ray thereon. After the contact expected surface (a) is sufficiently heated, the infrared ray generation source is moved away from the molded body (A) to stop the radiation; after cutting off the radiation of the infrared ray, the heating is ended such that radiated light from the infrared ray generation source is not radiated on the contact expected surface (a).

Herein, as for the heating temperature of the contact expected surface (a), in a case where the thermoplastic resin contained in the molded body is a crystalline resin, a range of melting point + 20°C to 100°C is preferable considering ease of joining and deterioration of the resin. In a case where the thermoplastic resin contained in the molded body is an amorphous resin, a range of glass transition temperature + 10°C to + 150°C is preferable.

As for the method for heating the contact expected surface (b) of the molded body (B), for example, similar to the molded body (A), the contact expected surface (b) may be pre-heated using the infrared radiation mechanism before contact. Additionally, the contact expected surface (b) may be directly heated using an infrared heater as a heat source, or hot plate welding. The contact expected surface (a) and the contact expected surface (b) may be heated simultaneously or may be heated successively. Depending on cases, only the contact expected surface (a) may be heated. In this case, the contact expected surface (b) is heated by contacting with the heated contact expected surface (a).

(Contacting Step)

The heated contact expected surface (a) is brought into contact with the contact expected surface (b). In a case of only heating the contact expected surface (a) without heating the contact expected surface (b), the time when the heated contact expected surface (a) is brought into contact with the contact expected surface (b) is within the time 5 seconds before the end of heating of the contact expected surface (a) till 10 seconds after the end of heating. It is preferable that the time is within the time immediately after the end of the heating of the contact expected surface (a) till 5 seconds after the end of the heating. In addition, in a case where the contact expected surface (a) and the contact expected surface (b) are heated simultaneously, the time is within the time 10 seconds before the end of the later-ended heating till 15 seconds after the end of the later-ended heating, the later-ended heating being one of the heating of the contact expected surface (a) and the heating of the contact expected surface (b) which ends later. It is preferable that the time is within the time 2 seconds before the end of the later-ended heating till 10 seconds after the end of the later-ended heating.

(Pressurization Step)

After bringing the surfaces to be contacted of the heated molded bodies into contact with each other as described above, it is preferable to apply pressure to each other together. The pressurization method is not particularly limited as long as it can sufficiently pressurize the contact surfaces to join the contact surfaces. Specific examples of the pressurization method include a pressurization method using hydraulic pressure and pneumatic pressure by a cylinder, and a pressurization method using a servo motor. It is preferable that the applied pressure is in a range of 0.1 MPa to 10 MPa with respect to the areas of the contact surfaces (c). It is more preferable that the applied pressure is in a range of 0.5 MPa to 5.0 MPa. At a pressure higher than 0.1 MPa, the contact surfaces can be sufficiently pressurized, and sufficient joining strength can be obtained. In addition, when the pressure is lower than 10 MPa, the capacity of the pressurizing device does not increase, which is economically advantageous.

The pressurization is continuously carried out until the thermoplastic resin present on each of the contact expected surface (a) and the contact expected surface (b) is cured. Specifically, it is preferable that the pressurization time is 1 second to 60 seconds, and more preferably 3 seconds to 40 seconds. When the pressurization time is longer than 1 second, sufficient joining strength can be obtained since the thermoplastic resin is sufficiently cured. When the pressurization time is shorter than 60 seconds, the time for producing a joined body, that is, the joining cycle is not prolonged, which is economically advantageous. After the pressurization in a predetermined time, the joined body can be obtained after being cooled. The contacting step and the pressurization step can be carried out in a desired mold. In this case, after the pressurization step, the mold is cooled and then taken out from the mold to obtain a joined body.

Examples

Hereinafter, Examples of the present invention are described in detail below, but the present invention is not limited only to the Examples.

(Preparation of Test Piece A1 of Molded Body (A))

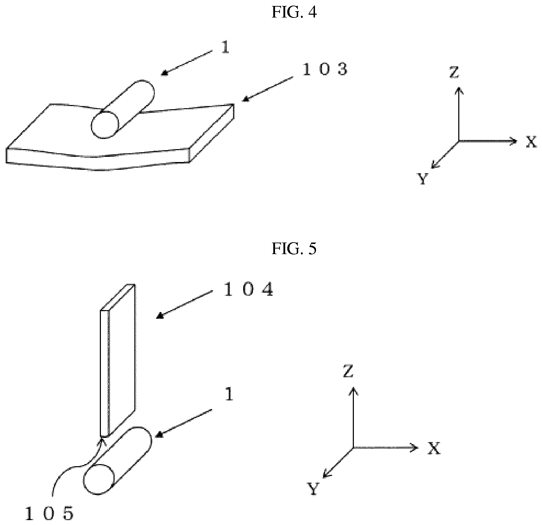

A carbon fiber bundle (Tenax (registered trademark) STS40 24K manufactured by Toho Tenax, having an average fiber diameter of 7 $\mu$m) was cut such that the weight average fiber length thereof was 15 mm. The carbon fiber bundle was disposed to be randomly dispersed in a mold. Next, a nylon 6 film (EMBLEM (registered trademark) Standard Grade manufactured by Unitika Ltd., having a thickness of 25 $\mu$m) was set in the mold such that the volume fraction Vfa of the carbon fibers was set to be 35%. The mold used was in a shape obtained by cutting out a part of a spherical surface, and the curvature radius thereof was 5000 mm. The size thereof was 200 mm $\times$ 200 mm when a curved surface portion from which a molded body can be obtained was projected onto a plane surface. A sheet-like molded body having a spherical curved surface with a plate thickness of 2.5 mm was obtained. Thereafter, the mold was maintained under a pressure of 10 MPa and at a temperature of 260°C for 10 minutes, and then the mold was cooled to obtain a molded body finally. A plate having a length of 100 mm, a width of 30 mm, and a thickness of 2.5 mm was cut out from this molded body to prepare a test piece A1 (103 in Fig. 4). The X direction, Y direction, and Z direction in Fig. 4 correspond to the length, width, and thickness, respectively.

In the obtained test piece A1, the carbon fibers are randomly dispersed in the in-plane direction, and are substantially isotropic in this direction. The thermal conductivity of the molded body at room temperature was 2.0 W/K·m as measured by a laser flash method.

(Preparation of Test Pieces A2 to A4 of Molded Body (A))

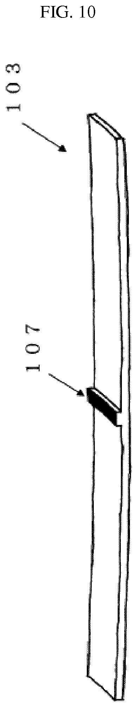

A test piece A2 of the molded body (A) was obtained in the same manner as the test piece A1 of the molded body (A) except that a mold was used that was provided with a recessed portion for integrally molding the molded body (D) described above. The recessed portion was shaped to have a length of 5 mm, a width of 30 mm in the width direction of the test piece A2, and a height of 2 mm in the thickness direction of the test piece A2, centering on a point 50 mm from the end portion in the longitudinal direction of the test piece A2. The depth of the recessed portion (corresponding to the height of the molded body (D)) was appropriately adjusted by a mold insert according to the required depth. In addition, the one formed by the recessed portion is the molded body (D) in a shape of block, which is an infrared receiving part. A contact expected surface (a) of the test piece A2 is a surface of the molded body (D), which is the infrared receiving part, as viewed from the plate thickness direction (107 in Fig. 10). The disposition of the carbon fiber bundle, the disposition of the nylon 6 film, or the like were adjusted such that the volume fraction Vfa of the carbon fibers in the molded body (A) was 35% and the volume fraction Vfd of the carbon fibers in a portion corresponding to the molded body (D) was 33%. In addition, a test piece A3 and a test piece A4 having different heights of the molded body (D) were prepared by setting the depth of the recessed portion in the mold to be 1 mm and 0.5 mm, respectively.

(Preparation of Test Piece A5)

A test piece A5 was prepared in the same manner as the test piece A2 except that the weight average fiber length was 30 mm.

(Preparation of Test Piece B1 of Molded Body (B))

A molded body was obtained using a nylon 6 (Unitika nylon manufactured by Unitika, A1030 (trade name)) by an injection molding machine with a mold clamping force of 100 t. A mold for obtaining a molded body of 100 mm length × 100 mm width × 5 mm thickness was used. A plate-shaped molded body of 100 mm length × 30 mm width × 5 mm thickness was cut out from the obtained molded body, and one end face (105 in Fig. 5) of 30 mm width × 5 mm thickness was cut into a curved surface so as to conform to the curvatures of the test pieces A1 to A5, and thereby obtaining a test piece B1. The thermal conductivity of the test piece B1 was 0.21 W/K·m as a result of measuring by the laser flash method.

(Preparation of Test Pieces D1, D2 of Molded Body (D))

Test pieces D1, D2 in a shape of block, as examples of the molded body (D), were obtained according to the following operations. A sheet-shaped molded body having a curved surface was obtained in the same manner as the test piece A1 except that a mold insert was adjusted to a thickness of 2 mm, and the volume fraction (Vfd) of the fibers was 35% and 42%. Thereafter, the sheet-shaped molded body obtained was cut into strips of 5 mm length × 30 mm width, so as to obtain the test pieces D1, D2, respectively.

(Method for welding Test Pieces D1, D2)

In order to weld the test pieces D1, D2, which were infrared receiving parts, to the test piece A1, hot plate welding was used. First, a heater block having a same curvature as the molded body was prepared. Next, the test piece A1 and the test piece D1 (and the test piece A1 and the test piece D2) were pressed against each other for 10 seconds in a state where the heater block was heated to 300°C, and thereafter, a force of 100 N was immediately pressurized thereto for 5 seconds by a pressurization tool. After cooling sufficiently, a sample was taken out. The test piece D1 or D2 was provided at a location having a length of 5 mm, a width of 30 mm in the width direction of the test piece A1, and a height of 2 mm in the thickness direction of the test piece A1, centering on a point 50 mm from the end portion in the longitudinal direction of the test piece A1. At this location, the D1 (or D2) was welded, and was formed in the same shape as the test piece A2. The test pieces prepared by welding were expressed as "A1 + D1", and "A1 + D2", respectively.

(Welding Using Each Test Piece and Evaluation Method)

Heating operations of the test piece A and the test piece B by the infrared ray generation source were disposed as shown in Fig. 4 and Fig. 5, respectively. At this time, the target heating range of the test piece A was set to be 5 mm in the longitudinal direction (the X direction shown in Fig. 4) of the test piece × 30 mm in the width direction (the Y direction shown in Fig. 4) of the test piece, this range being defined as the contact expected surface (a). Namely, in the contact expected surface (a) of the test pieces A2 to A7, A1 + D1, and A1 + D2, only the surface of the molded body (D) viewed from the plate thickness direction is the target heating range (107 in Fig. 10). In the test piece B, a curved surface (105 in Fig. 5) cut from the end face of 30 mm width × 5 mm thickness so as to conform to the curvature of the test piece A was heated, and the curved surface (105 in Fig. 5) subjected to cutting was defined as the contact expected surface (b).

A halogen heater (QIR 200V (trade name) manufactured by Ushio Inc.) was used as the infrared ray generation source. As the heating conditions, output of an infrared heater, a distance between the infrared heater and the contact expected surface (a) of the molded body (A), a distance between the infrared heater and the contact expected surface (b) of the molded body (B), and radiation time of the infrared heater were appropriately adjusted. The target temperature for heating the molded body was set at a point when the heated surface reached 60°C + the melting point of the thermoplastic resin constituting the molded body, and the heating was ended when reaching this target temperature.

After heating, the contact expected surface (a) of the molded body (A) and the contact expected surface (b) of the molded body (B) were contacted and pressurized. The pressurization was carried out by an air cylinder such that a pressure of 1 MPa was applied to the contact surface, and after pressurizing for 20 seconds, the joined body was taken out.

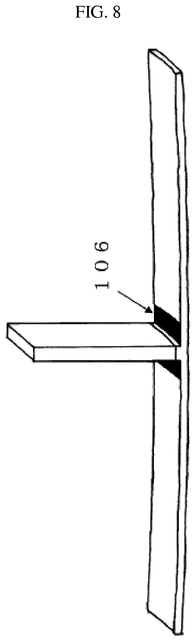

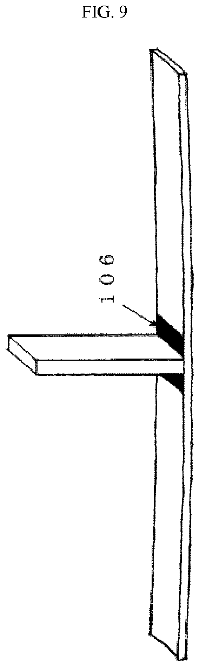

Evaluation of the appearance around the contact expected surface (a) was carried out by visually observing the heating trace after heating the test piece. The portions observed are the portions indicated by 106 in Fig. 8 and Fig. 9. The evaluation standard was defined as the width of the heating trace in the longitudinal direction of the test piece in the following manner.

Excellent (excellent appearance): the width of the heating trace in the longitudinal direction of the test piece is 5 mm (heating target width) + less than 1 mm

Good (acceptable appearance): the width of the heating trace in the longitudinal direction of the test piece is 5 mm (heating target width) + 1 mm to 2 mm

Bad (poor appearance): the width of the heating trace in the longitudinal direction of the test piece is larger than 5 mm (heating target width) + 2 mm

In addition, in the evaluation of springback, an increment in the thickness in the plate thickness direction around the contact expected surface (a) was used as an index. As above, the portions subjecting to thickness measurement are the portions indicated by 106 in Fig. 8 and Fig. 9.

Excellent: less than 0.5 mm from the surface of the test piece

Good: 0.5 mm or more to less than 1 mm from the surface of the test piece

Bad: 1 mm or more from the surface of the test piece

[Example 1]

The test piece A2 was heated by an infrared heater using a shield and the test piece B1 was heated. At this time, the output of the halogen heater was set to 975 W, the distance (β in Fig. 2) between the infrared heater and the contact expected surface (a) was 6 mm, and the heating time was 10 seconds. In addition, as the shield, an aluminum plate having a thickness of 0.5 mm was provided at a distance of 2 mm (α in Fig. 2) from the surface of the contact expected surface (a), and the shield reflected infrared rays that were not radiated to the contact expected surface (a).

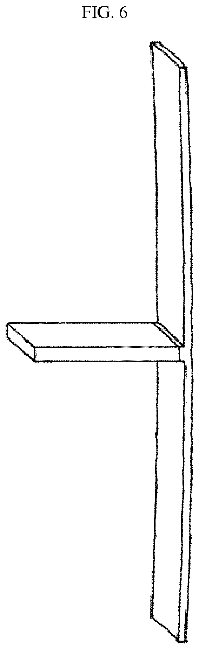

The test piece A2 and the test piece B1 which were heated were immediately brought into contact with each other, pressurized at a predetermined pressure and temperature, and then cooled to room temperature to obtain a joined body shown in Fig. 6. The contact surfaces (c) might contain a shape as a part of the spherical surface, which was a three-dimensional curved surface. When confirming the appearance around the contact expected surface (a) and the presence of springback, the appearance was good and no springback was observed. The results were shown in Table 1 and Table 2. Incidentally, as described above, the contact expected surface (a) of the test piece A2 is the surface of the molded body (D), which is the infrared receiving part, as viewed from the plate thickness direction (107 in Fig. 10).

[Example 2 to Example 8, and Comparative Example 1]

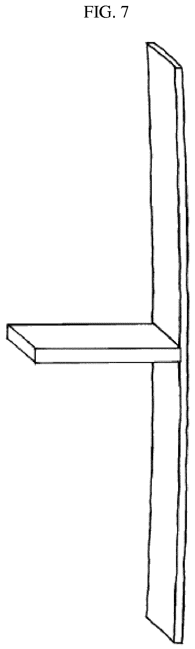

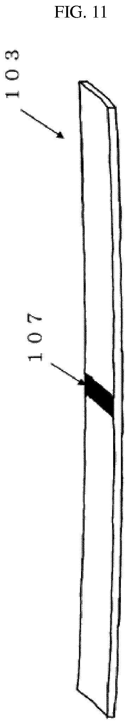

In the same manner as in Example 1, each test piece was heated and joined under the conditions described in Table 1 and Table 2, and after cooling to room temperature, the obtained joined body was evaluated. The results were shown in Table 1 and Table 2. Incidentally, Fig. 7 showed a joined body obtained in a case using a test piece without providing the molded body (D) (Example 2 and Comparative Example 1). Further, an example of the contact expected surface (a) in this case was indicated by 107 in Fig. 11.

[Table 1]

| | | | | Example 1 | Example 2 | Example 3 | Example 4 |
|---|---|---|---|---|---|---|---|
| Molded body (A) | | Test piece used | | A2 | A1 | A2 | A1+D1 |
| | | Matrix resin | | PA6 | PA6 | PA6 | PA6 |
| | | Form of fiber | | Random in in-plane direction | Random in in-plane direction | Random in in-plane direction | Random in in-plane direction |
| | | Average fiber length | | 15 mm | 15 mm | 15 mm | 15 mm |
| | | Volume fraction (Vfa) of carbon fiber | | 35% | 35% | 35% | 35% |
| Molded body (B) | | Test piece used | | B1 | B1 | B1 | B1 |
| | | Matrix resin | | PA6 | PA6 | PA6 | PA6 |
| Infrared radiation mechanism | Shield | Yes or No | | Yes | Yes | No | No |
| | Infrared receiving part | Yes or No | | Yes | No | Yes | Yes |
| | | Molded body (D) | Height | 2 mm | - | 2 mm | 2 mm |
| | | | Volume fraction (Vfd) of carbon fiber | 33% | - | 33% | 35% |
| | | | Disposition method | Integral molding | - | Integral molding | Welding |
| Evaluation | | Springback | | Excellent | Excellent | Excellent | Excellent |
| | | Appearance | | Excellent | Excellent | Excellent | Good |
| PA6: poly ε-caprolactam, nylon 6 | | | | | | | |

[Table 2]

| | | | Example 5 | Example 6 | Example 7 | Example 8 | Comparative Example 1 |
|---|---|---|---|---|---|---|---|
| Molded body (A) | | Test piece used | A3 | A4 | A1+D2 | A5 | A1 |
| | | Matrix resin | PA6 | PA6 | PA6 | PA6 | PA6 |
| | | Form of fiber | Random in in-plane direction | Random in in-plane direction | Random in in-plane direction | Random in in-plane direction | Random in in-plane direction |
| | | Average fiber length | 15 mm | 15 mm | 15 mm | 15 mm | 15 mm |
| | | Volume fraction (Vfa) of carbon fiber | 35% | 35% | 35% | 35% | 35% |
| Molded body (B) | | Test piece used | B1 | B1 | B1 | B1 | B1 |
| | | Matrix resin | PA6 | PA6 | PA6 | PA6 | PA6 |
| Infrared radiation mechanism | Shield | Yes or No | No | No | No | No | No |
| | Infrared receiving part | Yes or No | Yes | Yes | Yes | Yes | No |
| | | Molded body (D) Height | 2 mm | 0.5 mm | 2 mm | 2 mm | - |
| | | Volume fraction (Vfd) of carbon fiber | 33% | 33% | 42% | 33% | - |
| | | Disposition method | Integral molding | Integral molding | Welding | Integral molding | - |
| Evaluation | | Springback | Excellent | Good | Excellent | Excellent | Bad |
| | | Appearance | Bad | Bad | Bad | Excellent | Bad |
| PA6: poly ε-caprolactam, nylon 6 | | | | | | | |

Description of Reference Numerals

| | | |
|---|---|---|
| 1 | Infrared heater (infrared ray generation source) | |
| 2 | Shield | |
| 3 | Molded body (A) | |
| 4 | Molded body (B) | |
| 5 | Infrared receiving part | |
| 103 | Test piece A | |
| 104 | Test piece B | |
| 105 | Curved surface cut to conform to curvature of molded body (A) | |
| 106 | Range for evaluating appearance and springback | |
| 107 | Example of contact expected surface (a) | |
| α | Distance between contact expected surface (a) and shield | |
| β | Distance between contact expected surface (a) and infrared ray generation source | |

**Claims**

1. A method for producing a joined body, including:

   heating a contact expected surface (a) of a molded body (A) containing carbon fibers having a weight average fiber length of 1 mm to 100 mm and a thermoplastic resin, by using an infrared radiation mechanism capable of selectively infrared radiating the contact expected surface (a);
   brining the heated contact expected surface (a) into contact with a contact expected surface (b) of a molded body (B) containing a thermoplastic resin; and
   joining the molded body (A) and the molded body (B),

   wherein contact surfaces (c) formed by contacting the contact expected surface (a) with the contact expected surface (b) include three-dimensional curved surfaces.

2. The method for producing a joined body according to claim 1,
   wherein the contact expected surface (b) of the molded body (B) containing a thermoplastic resin is pre-heated and the contact expected surface (b) in a pre-heated state is brought into contact with the contact expected surface (a).

3. The method for producing a joined body according to claim 1 or 2,
   wherein the carbon fiber contained in the molded body (A) is dispersed randomly in an in-plane direction of the molded body (A).

4. The method for producing a joined body according to any one of claims 1 to 3,
   wherein the infrared radiation mechanism is a mechanism including a shield, for preventing radiation of the infrared ray, on a surface of the molded body (A) other than the contact expected surface (a).

5. The method for producing a joined body according to claim 4,
   wherein the shield is an infrared absorber absorbing the infrared ray, or an infrared reflector reflecting the infrared ray.

6. The method for producing a joined body according to any one of claims 1 to 3,
   wherein the infrared radiation mechanism is a mechanism in which an infrared receiving part is provided on the molded body (A) and the contact expected surface (a) is disposed on the infrared receiving part.

7. The method for producing a joined body according to claim 6,
   wherein the infrared receiving part is a molded body in a shape of fiber, powder, sheet, block or a combination thereof.

8. The method for producing a joined body according to claim 6 or 7,
   wherein the infrared receiving part is a molded body (D) containing carbon fibers and a thermoplastic resin.

9. The method for producing a joined body according to claim 8,

wherein the molded body (D) is integrated with the molded body (A) by integral molding with the molded body (A).

10. The method for producing a joined body according to claim 8 or 9,
wherein a volume fraction (Vfa) of the carbon fiber contained in the molded body (A) and a volume fraction (Vfd) of the carbon fiber in the molded body (D) satisfy a relationship described below:

$$0.5 \leqq Vfd/Vfa \leqq 1.0$$

wherein, the volume fraction of the carbon fiber is represented by the following equation:

{Volume fraction (Vfa, Vfd) of carbon fiber in molded body (A, D)}

$= 100 \times$ (volume of carbon fiber) / ((volume of carbon fiber) + (volume of thermoplastic resin)).

11. The method for producing a joined body according to claim 10,
wherein the volume fraction (Vfa) of the carbon fiber is 5% to 70%.

12. The method for producing a joined body according to any one of claims 4 to 11,
wherein the shield is used as the infrared radiation mechanism.

FIG. 1

FIG. **2**

FIG. 3

FIG. 4

FIG. 5

FIG. 6

FIG. 7

FIG. 8

FIG. 9

106

FIG. 10

FIG. 11

## INTERNATIONAL SEARCH REPORT

International application No.

PCT/JP2016/061977

| A. CLASSIFICATION OF SUBJECT MATTER |
|---|
| B29C65/02(2006.01)i |

According to International Patent Classification (IPC) or to both national classification and IPC

| B. FIELDS SEARCHED |
|---|
| Minimum documentation searched (classification system followed by classification symbols) |
| B29C65/00-65/82 |

Documentation searched other than minimum documentation to the extent that such documents are included in the fields searched

| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2013/084963 A1 (Teijin Ltd.), 13 June 2013 (13.06.2013), paragraphs [0012] to [0026]; each drawing & US 2014/0286697 A1 paragraphs [0022] to [0044]; each drawing | 1-12 |
| X Y | JP 2013-14113 A (Mitsubishi Rayon Co., Ltd.), 24 January 2013 (24.01.2013), claims; paragraphs [0007], [0016] to [0018], [0028], [0034] (Family: none) | 1-3,6-11 4,5,12 |
| Y | JP 2004-351881 A (Nitto Denko Corp.), 16 December 2004 (16.12.2004), claim 1; paragraph [0014] (Family: none) | 4,5,12 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 June 2016 (16.06.16) | 28 June 2016 (28.06.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/061977

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 9-300471 A  (Mitsubishi Motors Corp.),<br>25 November 1997 (25.11.1997),<br>paragraphs [0027] to [0046]<br>& US 5928453 A<br>columns 8 to 10<br>& DE 19719363 A           & SE 9701729 A<br>& KR 10-0236397 B         & CN 1169358 A<br>& MY 123106 A | 4,5,12 |
| A | JP 2011-525441 A  (Airbus Operations Ltd.),<br>22 September 2011 (22.09.2011),<br>paragraphs [0001], [0023] to [0025]<br>& US 2011/0065888 A1    & GB 811548 D<br>& WO 2009/156754 A1      & EP 2303537 A<br>& CA 2729200 A           & KR 10-2011-0028499 A<br>& CN 102076475 A         & RU 2011101433 A | 1-12 |
| A | JP 2013-233729 A  (Teijin Ltd.),<br>21 November 2013 (21.11.2013),<br>entire text<br>(Family: none) | 1-12 |
| A | JP 2007-313778 A  (Teijin Techno Products Ltd.),<br>06 December 2007 (06.12.2007),<br>entire text<br>(Family: none) | 1-12 |
| A | JP 2013-203026 A  (Sumitomo Chemical Co., Ltd.),<br>07 October 2013 (07.10.2013),<br>entire text<br>(Family: none) | 4,5,12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013014113 A

- JP 3175513 U